# EUROPEAN PATENT APPLICATION

(11) **EP 4 159 803 A1**
(43) Date of publication of application: **05.04.2023**
(21) Application number: 21075012.1
(22) Date of filing: 04.10.2021
(51) Int. Cl.: C08K 5/17, C08F 230/08, C09D 131/02, C09D 143/04, C08F 218/10

(54) **NON YELLOWING CATALYST USED FOR AMBIENT CURE OF COMPOSITIONS COMPRISING COPOLYMERS OF VINYL BRANCHED ESTER AND VINYL SILANE AND USE THEREOF**

(71) Applicant: Hexion Inc., Columbus, OH 43215 (US)
(72) Inventor: Heymans, Denis Steinbrecher, Christophe, 1348 Ottignies Louvain-La-Neuve (BE)
(74) Representative: Sonnenhauser, Thomas Martin

(57) **Abstract**

The present invention relates to compositions of catalysts to be used in low temperature (<80°C) moisture curable, two package pigmented coatings as alternative to tin salts. The catalysts based on low toxic hydroxylamines alone or in combination with an organic acid offer low color and high efficiency coatings.

## Description

### FIELD OF THE INVENTION

The present invention relates to compositions of catalysts to be used in low temperature (<80°C) moisture curable, one package pigmented coatings as alternative to tin salts. The catalysts based on low toxic hydroxylamines alone or in combination with an organic acid offer low color and high efficiency coatings.

### BACKGROUND OF THE INVENTION

The use of silane in coating formulations are well known and especially acrylic-silane coating compositions have an accepted cure rate and upon curing product films having good physical and chemical properties. The current catalyst for these paints are tin based salts; however, one important disadvantage of these tin compositions is their high toxicity. Since decades options to solve this main drawback have been addressed by the industry.

US 3,094,497 relates to the use of amine carboxylates as catalyst for the condensation of silanes. Example 1 gives a list of catalyst made from primary, secondary and tertiary amines combined with carboxylic and polyphosphates. It is silent about hydroxyl amines.

US 3,208,961 discloses the "in-situ" combination of lead compound such as lead monoxide and lead carbonate with ammonium salts of carboxylic acids.

US10640641 describes tin-free curable composition having (A) one or more organic polymers having a reactive-silicon-containing group, wherein at least one polymer has(..) saturated hydrocarbon polymers, and (meth)acrylic acid ester polymers; (B) from 0.001 to 20 parts by weight (...) of a silanol condensation catalyst consisting of one or more metal amidine complexes and one or more amine carboxylate salts.

The JP-A-5-117519 or EP 0 538 881 which discloses that the curing performance is abruptly improved by using a carboxylic acid and an amine together, but these compositions suffer from lack of sufficient adhesiveness. In addition, storage stability of such catalysts is undesirable and premature gelation can occur during storage of such compositions. Series of suitable carboxylic acids and amines are disclosed. Amongst which the only hydroxyl amines are isopropanol amine and monoethanolamine. The document is silent about examples of the actual use of hydroxylamine nor any evidence that the authors would have found superior properties with hydroxylamines compared to other amines. There is no discussion on the effect of the amine on color and the possible better performance of some amines with that respect.

This clearly shows that the paint industry is still looking for an alternative catalyst to the current tin organic salt which should be replaced for environmental and toxicity aspects.

### SUMMARY OF THE INVENTION

After our research on the curing of especially acrylic-silane coating compositions we have found that the use of sterically hindered primary hydroxylamines alone or in combination with an organic acid offer to the industry an alternative to tin catalysts.

### DETAILED DESCRIPTION OF THE INVENTION

The invention is about the use as catalyst of sterically hindered primary hydroxylamines, as defined in the structure 1, alone or in combination with an organic acid.

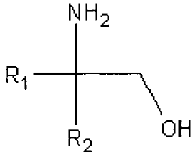

### Structure 1

The amines of this invention are primary amines on a quaternary carbon atom from which at least one of the substituents as a hydroxyl function.
R1= CH3,CH2CH3,CH(CH3)2, CH2CH(CH3)2, alkyl, cycloalkyl, aryl,
   R2= alkyl,cycloalkyl,aryl,hydroxy alkyl,CH2OH, CH2CH2OH
R1 and R2 could be linked in a cyclic structure, as for example forming a cyclohexane ring.

Examples of this family are:
2-amino-2-methylpropan-1-ol (AMP) 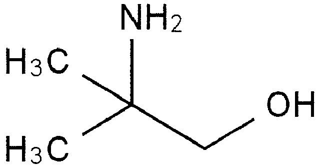
Or the 2-amino-2-ethyl-1 3-propanediol (AEP) 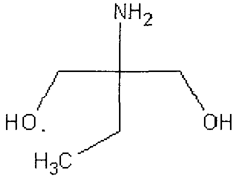
And tris(hydroxymethyl)aminomethane,

Another embodiment of this invention is the combination of the hydroxylamines of structure 1 and an organic acid. The preferred organic acid are alkyl carboxylic acid : R3 COOH with R3 is CH3, CH2CH3, alkyl, branched alkyl, cycloalkyl. Examples of acids include: acetic acid, propanoic acid, hexanoic acid,2-ethylhexanoic acid, neodecanoic acid (Versatic 10 from Hexion Inc.).

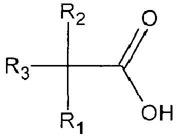

The hydroxylamine of structure 1 are preferably used in concentration of 0.2 to 5 weight percent on solid resin. The most prefer level is between 0.5 to 3.5 Wt% on solid resin.

The combination of the hydroxylamine and an organic acid is used in a concentration between 0.3 and 5 weight% on solid resin. The ratio between the acid and the amine is between 0.1/1 to 5/1 and preferably between 2/1 to 1.2/1. The combination of the amine and the acid shows a synergy effect resulting in improved film properties as given in the examples below.

In order to provide a better understanding of the present invention including representative advantages thereof, the following examples are offered.

### EXAMPLES:

In order that those skilled in the art may more fully understand the invention presented herein, the following procedures and examples are set forth. Unless otherwise indicated, the following units of measurement and definitions apply in this application: all parts and percentages are by weight; temperatures are in degrees centigrade (°C).

### Experimental

For the following examples, the data was derived in accordance with the following procedures.
Solids: The solids is the weight percentage of non volatile material present in the coating formulations. It is measured by weight loss in ventilated oven for 1hr at 110°C
Viscosity: The viscosity is the resistance of the polymer preparation to flow. Viscosity is determined by Brookfield viscosimeter.
Molecular weight: The molecular weight is given in weight & number average Mw determined by Gel permeation chromatograph using polystyrene as reference, tetrahydrofurane as elution solvent and Refractive Index as detector like described in DIN Standard 55672
Potlife: The potlife is an estimation of the time during which the polymer composition can be used for a specific application. Potlife is typically determined by the time taken for the formulated system to double its initial viscosity in a closed can once the application has been performed.
Shelf-life: The shelf-life is an estimation of the time that the formulated binder can be stored without losing its performance in typical storage conditions. The shelf-life is typically determined by measuring viscosity variation.
Solvent resistance; ASTM D4752 involves rubbing the surface of a baked film with cheesecloth soaked with Methylethyl ketone, MEK, until failure or breakthrough of the film occurs. The rubs are counted as a double rub (one rub forward and one rub backward constitutes a double rub).
Hardness; The Koenig pendulum hardness test is based on the principle that the amplitude of the pendulum's oscillation will decrease more quickly when supported on a softer surface. There are several hardness tests which relate the damping of an oscillation motion to hardness of surfaces.
Color: The resins were compared visually, giving a score of 0 for a waterwhite resin and 5 for the most colored resin.

The following examples were performed and are provided to illustrate the invention and should not be interpreted as limiting the scope of the invention.

### Example 1, synthesis of sillilated resin

A reactor equipped with a stirrer and condenser is charged with the ingredients of Table 1

**Table 1**

| Initial Reactor Charge | Weight phm (per 100 monomer) | Weight (g) in 3L reactor |
|---|---|---|
| Butyl Acetate | | 391.8 |
| Luperox 531M80 | 0.40 | 8.4 |
| Monomer Mix | | |
| VeoVa 9* | 52.00 | 1091.8 |
| VeoVa 10* | 28.00 | 587.9 |
| Vinyl trimethoxy silane Silquest A171 | 5.00 | 105.0 |
| Methacryloxypropyl trimethoxy silane Silquest A174 | 15.00 | 315.0 |
| Peroxide Luperox 531M80 | 0.80 | 21.0 |
| Booster | | |
| Luperox 531M80 | 1.60 | 42.0 |
| Butyl Acetate | | 150.0 |
| | | |
| Feeding time (hr) Monomer mix | 4 | at 115 °C |
| Feeding time (hr) booster | 1 | at 115 °C |
| Post cooking (hr) | 1 | at 115 °C |
| Total weight of monomer (g) | | 2099.7 |
| Total solid (g) | | 2171.1 |
| Total intake (g) | | 2712.9 |
| Solid content % | | 79,4% wt |
| Viscosity | | 16033 cP |

| | | |
|---|---|---|
| ∗ Vinyl ester of neononanoic acid ∗ Vinyl ester of neodecanoic acid | | |

Butyl acetate was poured in the reactor and heated to 115°C. Once the temperature was reached the Luperox 531M80 was added and the feeding of the monomer mix and Luperox in 4hours was initiated. Afterwards, the booster mix was dosed in one hour whilst keeping the reactor temperature at 115°C. Finally, the reactor was cooled to below 60°C.

The resin of example 1 was diluted with butyl acetate to achieve a viscosity of 100 cP and mixed with a portion of catalyst as presented in Table 2.

The formulated clearcoat were applied by barcoater at an approximate wet thickness of 100 microns on steel panels and allowed to dry and cure for at least one week (168 hours) at approximately 23°C and 50% relative humidity. The evolution of the curing and hardening of the coatings was measure by Koënig hardness. And the yellowing of the liquid samples was assessed visually. Samples were ranked from 0, no yellowing to 4, strong yellowing.

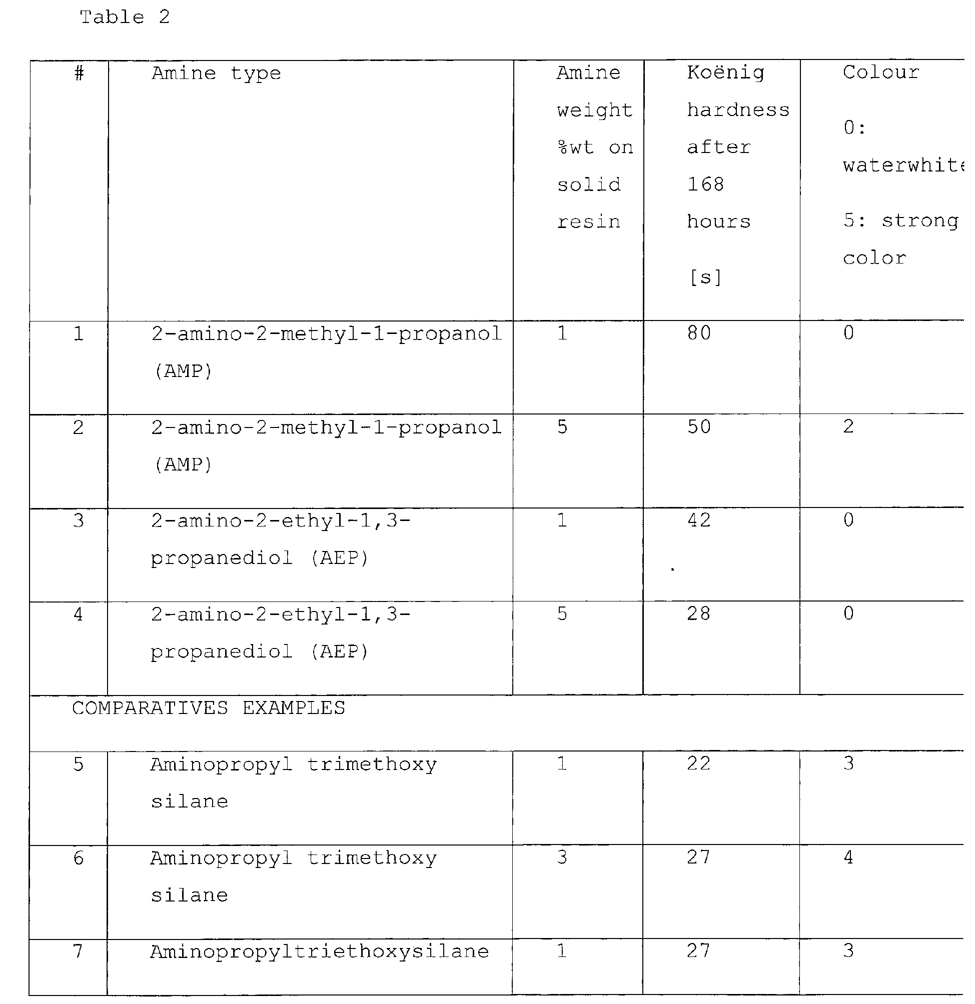

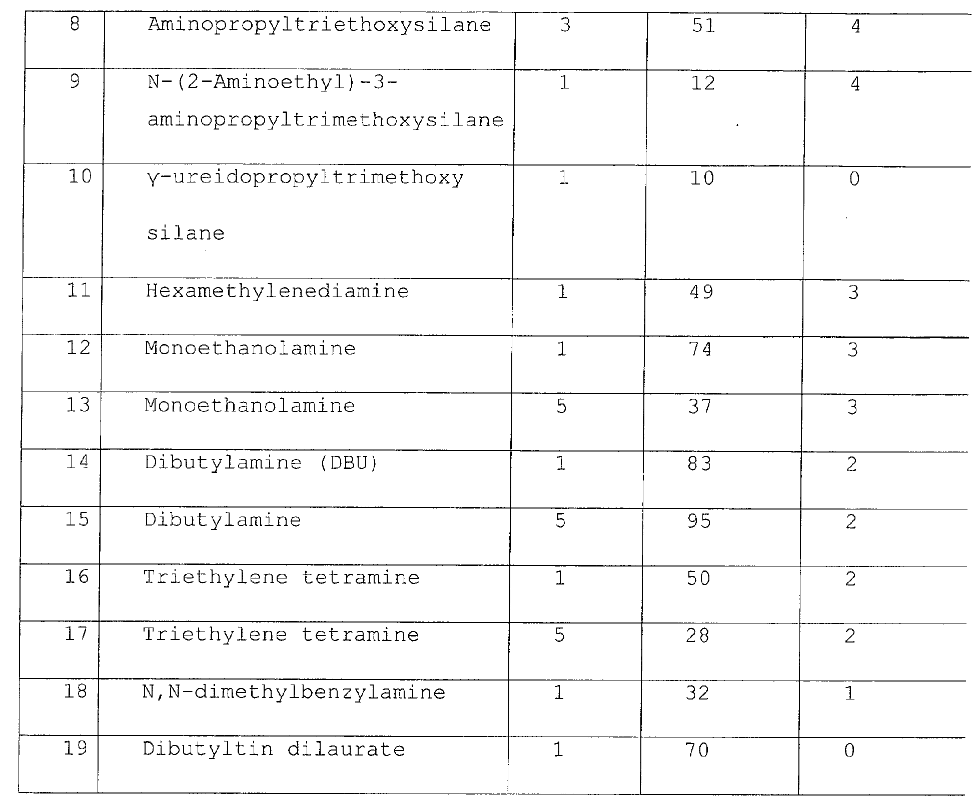

Conclusion of Table 2; from the non-tin catalysts, only AMP and DBU show high reactivity. Additionally, AMP gives a lower color at low concentration. Dibutylamine gives a very-good reactivity but is highly toxic. One will also appreciate that AMP and AEP, at 1% level do not cause yellowing of the resins unlike the other amines used.

AMP and AEP combine the benefits of high reactivity, low yellowing and being tin-free.

### Example 2, synthesis of a sillilated resin

A reactor equipped with a stirrer and condenser is charged with the ingredients of Table 3

| Initial Reactor Charge | Weight phm (per 100 monomer) | Weight (g) in 3L reactor |
|---|---|---|
| n-Butyl Acetate | 23,6 | 507 |
| ACH-80-AL3 (United initiator) | 0, 90 | 19,4 |
| Methyl trimethoxy silane | 2,5 | 54 |
| n-Butanol | 2,5 | 54 |
| | | |
| | | |
| Monomer Mix | | |
| VeoVa 9 | 52, 0 | 1118 |
| VeoVa 10 | 28, 0 | 602 |
| Silquest A171 | 5, 0 | 107,5 |
| Silquest A174 | 15, 0 | 322,5 |
| ACH-80-AL3 | 0, 90 | 19, 4 |
| Booster | | |
| ACH-80-AL3 | 1,33 | 28,7 |
| n-Butyl Acetate | 2, 0 | 43 |
| | | |
| Feeding time (hr) Monomer mix | 4 | at 105 °C |
| Feeding time (hr) booster | 1 | at 105 °C |
| Post cooking (hr) | 1 | at 105 °C |
| Total weight of monomer (g) | | 2150, 9 |
| Total solid (g) | | 2184,7 |
| Total intake (g) | | 2878, 96 |
| Solid content % | | 76, 8% wt |

Butyl acetate was poured in the reactor and heated to 105°C. Once the temperature was reached the Luperox 531M80 was added and the feeding of the monomer mix and Luperox in 4hours was initiated. Afterwards, the booster mix was dosed in one hour whilst keeping the reactor temperature at 105°C. The reactor was cooled to below 60°C, 2 phm vinyl trimethoxy silane was added to resin, and finally 30 phm n-butyl acetate was added to reduce the viscosity to about 100 cP.

### Example 3 preparation of a paint:

A 1K moisture curing paint was prepared using 240g of the resin of example 2, 6,49 g dispersing agent Disperplast P, 2,3g leveling agent BYK 358N, 2,3g defoamer BYK 077, 4,66g sagging control agent Solthix 250 and 129,7g of hydrophobic titanium dioxide Ti-Pure R350 in the grind. For the let-down, 58,4 g ethoxyethyl propionate and 59,9 g methyl amyl ketone were used. Low water content quality ingredients were preferred to avoid a premature curing of the paint in the can. Finally, 3% on solid polymer of Coatosil MP200 were added as adhesion promotor.

### Evaluation of catalysts for clearcoats:

A series of catalysts were mixed with the resin of example 2 The so formulated clearcoat were applied by barcoater at an approximate wet thickness of 100 microns on steel panels and allowed to dry and cure for at least one week (168 hours) at approximately 23°C and 50% relative humidity. The evolution of the curing and hardening of the coatings was measure by Koënig hardness and solvent resistance.

**Table 4**

| # | Catalyst | Catalyst wt% on dry resin | König hardness 7 days [s] | MEK resistance 24 hrs [cycles] |
|---|---|---|---|---|
| Comparative 1 | DBTDA | 0,5 | 150 | 38 |
| 1 | AMP | 0,3 | 115 | 39 |
| 2 | Versatic 10 | 0,5 | 15 | 1 |
| 3 | Versatic 10 | 2.0 | 24 | 1 |
| 4 | Versatic 10/AMP | 0,5/0,3 | 138 | 66 |
| Comparative 2 | Versatic 10/DBU | 0,5/03 | 104 | 65 |

Conclusion from this table: There is a synergistic effect between the carboxylic acid used (Versatic 10) and the hydroxylamine (AMP).

## Claims

1. A one-component solvent borne curable coating composition comprising:
(A) an organic polymer having silicon-containing group(s) which can be crosslinked by the formation of a siloxane bond;
(B) a sterically hindered primary hydroxylamine of structure 1 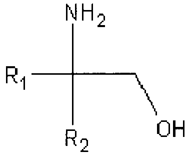 or
(C)a sterically hindered primary hydroxylamine of structure 1 combined with an organic acid.

2. The polymer of claim 1 where the organic polymer contains vinyl esters of carboxylic acids with C2 to C13 carbons.

3. The product of claim 1 where the sterically hindered primary hydroxylamine of structure 1 is used in a concentration of 0.2 to 5 Wt% on solid resin between 0.5 to 3.5 Wt% on solid resin.

4. The product of claim 1 where the combination of the hydroxylamine and an organic acid is used in a concentration between 0.3 and 5 weight% on solid resin, in a weight ratio acid / amine is between 0.1/1 to 5/1 and preferably between 2/1 to 1.1/1.

5. The product of claim 1 where the sterically hindered primary hydroxylamine of structure 1 wherein R1is CH3,CH2CH3,CH(CH3)2, CH2CH(CH3)2, alkyl, cycloalkyl, aryl, and R2 is alkyl, cycloalkyl, aryl, hydroxy alkyl,CH2OH, CH2CH2OH or R1 and R2 could be linked in a cyclic structure, as cyclohexane ring.

6. The product of claim 1 where the sterically hindered primary hydroxylamine of structure 1 is hydroxylamine is 2-amino-2-methylpropan-1-ol OR 2-amino-2-ethyl-1,3-propanediol.

7. The product of claim 1 where the organic acid is an alkyl carboxylic acid.

8. The product of claim 1 where the organic acid is acetic acid, propanoic acid, hexanoic acid, neodecanoic acid and a combination of them.

9. The product of any claims containing an amino-group-substituted silane compound AND/OR an epoxy-group substituted silane compound.
